# EUROPÄISCHE PATENTSCHRIFT

(11) **EP 1 705 739 B1**
(45) Veröffentlichungstag und Bekanntmachung des Hinweises auf die Patenterteilung: **19.09.2012**
(21) Anmeldenummer: 06001719.1
(22) Anmeldetag: 28.04.2001
(51) Int. Cl.: H01M 8/04

(54) **Verfahren zum Betreiben eines Brennstoffzellensystems**
Method for operating a fuel cell system
Méthode de foctionnement d'un système de pile à combustible

(30) Priorität: 19.05.2000 DE 10024570
(43) Veröffentlichungstag der Anmeldung: 27.09.2006
(62) Teilanmeldung aus: 01110522.8
(73) Patentinhaber: Daimler AG, 70327 Stuttgart (DE); Ford Motor Company, Dearborn, MI 48126 (US)
(72) Erfinder: Kaufmann, Lars, 53347 Alfter (DE)
(74) Vertreter: JENSEN & SON

(56) Entgegenhaltungen:
- WO-A-91/03844
- DE-A1- 4 318 818
- DE-C1- 4 032 993
- DE-C1- 19 605 404
- US-A- 3 972 731
- US-A- 4 128 700

## Beschreibung

Die Erfindung betrifft ein Verfahren zum Betreiben eines Brennstoffzellensystems gemäß dem Oberbegriff des Anspruchs 1.

Aus der US-A1-3,972,731 ist ein Brennstoffzellensystem bekannt, bei dem zur Luftversorgung der Brennstoffzellen-Kathode ein Kompressor eingesetzt wird, der mit einer Turbine über eine gemeinsame Welle verbunden ist. Die Brennstoffzellen-Anode wird mit einem wasserstoffreichen Reformat beaufschlagt, welches durch eine endotherme Reaktion in einem Dampfreformer erzeugt wird. Der Dampfreformer ist thermisch mit einem katalytischen Brenner gekoppelt. Das heiße und feuchte Kathodenabgas wird in einem Wasserabscheider stark abgekühlt, entfeuchtet und anschließend durch einen im Abgasstrang angeordneten katalytischen Brenner wieder erhitzt. Das erhitzte Abgas treibt die mit dem Kompressor gekoppelte Turbine an.

Brennstoffzellensysteme benötigen zur Luftversorgung der Kathodenseite üblicherweise eine Verdichtungsmaschine. Bei methanolbetriebenen Brennstoffzellensystemen ist ein hoher Systemdruck an sich vorteilhaft. So wird z.B. die Wasserbilanz des Systems verbessert. Weiterhin steigt der Wirkungsgrad der Brennstoffzelle durch den höheren Sauerstoffpartialdruck, und die Druckverluste im Brennstoffzellensystem werden minimiert.

Ein erhöhtes Druckniveau ist jedoch mit einer höheren Aufnahmeleistung der Verdichtungsmaschine verbunden, was zu Wirkungsgradeinbußen und bei gleicher Nutzleistung zu einer Vergrößerung des Brennstoffzellensystems führt.

Die WO 91/03844 A1 beschreibt ein Verfahren zum Betreiben eines Brennstoffzellensystems, bei dem ein Anodenabgasstrom, der je nach Betriebsweise des Brennstoffzellensystems und dem in dem Brennstoffzellensystem eingesetzten Brennstoffzellentyp einen H₂-Restgehalt von etwa 5-30% der H₂-Anodeneintrittsmenge enthält, gemeinsam mit einem Kathodenabgasstrom einem katalytischen Brenner zugeführt wird. Das bei der katalytischen Verbrennung der Brennstoffzellenabgase erzeugte Verbrennungsabgas wird einer Expansionsmaschine zugeführt, die einen Kompressor zur Zufuhr von Druckluft zu einer Brennstoffzellenkathode antreibt.

Die US 4,128,700 offenbart ebenfalls ein Verfahren zum Betreiben eines Brennstoffzellensystems, bei dem im Betrieb des Brennstoffzellensystems entstehende Anoden - und Kathodenabgase in einem Brenner verbrannt werden. Ein Teil des von dem Brenner erzeugten Verbrennungsabgases wird über eine Turbine geleitet, die einen Kompressor zur Zufuhr von Druckluft zu einer Brennstoffzellenkathode antreibt. Ein weiterer Teil des von dem Brenner erzeugten Verbrennungsabgases wird zur Beheizung eines Dampfreformierungsreaktors genutzt.

Es ist die Aufgabe der Erfindung, ein Verfahren zum Betreiben eines PEM-Brennstoffzellensystems anzugeben, das es ermöglicht, eine Brennstoffzelleinheit des Brennstoffzellensystems bei gleichbleibender Nutzlast kleiner auszulegen.

Diese Aufgabe wird durch ein Verfahren mit den Merkmalen des Anspruchs 1 gelöst.

Bei einem Brennstoffzellensystem, bei dem die Brennstoffzelleneinheit vorzugsweise mit reinem Wasserstoffgas betrieben wird, ist im Kathodenabgas-Strömungsweg ein katalytischer Brenner angeordnet, wobei der Anodenabgas-Strömungsweg in den katalytischen Brenner und/oder stromauf des katalytischen Brenners in den Kathodenabgas-Strömungsweg mündet. Der vereinigte, katalytisch umgesetzte Brennstoffzellenabgasstrom ist mit hoher Temperatur in eine Expansionsmaschine einleitbar.

Der besondere Vorteil liegt darin, dass bei einem derartigen Brennstoffzellensystem, bei dem die Brennstoffzelleneinheit mit möglichst reinem Wasserstoff betrieben wird, die Möglichkeit besteht, im Teillastbereich mit geringem Wasserstoffüberschuss zu arbeiten und im Hochlastbereich den Wasserstoffüberschuss so zu erhöhen, dass eine große Menge an Abgasenergie zur Verfügung steht.

Bei einer besonders bevorzugten Verschaltungsart der Brennstoffzelleneinheit, bei der Brennstoffzellenstapel strömungstechnisch in Serien- und Parallelschaltung zusammengeschaltet werden, kann der Wasserstoffüberschuss über Teillastbereich und Volllastbereich optimiert werden. Wird die Brennstoffzelleneinheit mit reinem oder gut gereinigtem Wasserstoff betrieben, ist sichergestellt, dass auch die in Strömungsrichtung letzte Zelle oder der letzte Brennstoffzellenstapel Wasserstoff in ausreichender Reinheit erhält.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung eines Brennstoffzellensystems mit einem Mischer im Abgasstrom,
- Fig. 2: eine weitere Ausführungsform eines Brennstoffzellensystems ohne Mischer und
- Fig. 3: eine Ausführungsform eines Brennstoffzellensystems,
- Fig. 4: eine günstige Verschaltung von einzelnen Brennstoffzellenstapeln innerhalb einer einzigen Brennstoffzelleneinheit in einem Brennstoffzellensystem und
- Fig. 5: eine weitere Ausgestaltung des Brennstoffzellensystems mit Gaserzeugungssystem.

Die Erfindung ist sowohl für stationäre Brennstoffzellensysteme geeignet als auch für solche Brennstoffzellenanlagen, die für den Betrieb von Fahrzeugen bestimmt sind. Besonders vorteilhaft ist die Erfindung für Brennstoffzellensysteme, die üblicherweise bei niedrigen Temperaturen betrieben werden, wie etwa Brennstoffzellensysteme mit Polymerelektrolytmembranen. In derartigen PEM-Brennstoffzellensystemen stehen hohe Temperaturen deutlich über 100°C im System üblicherweise nicht zur Verfügung oder sind der Temperaturbilanz wegen nicht erwünscht.

Vorteilhaft ist die Erfindung bei solchen Brennstoffzellensystemen, bei denen die Brennstoffzelleneinheit mit sehr reinem Wasserstoffgas versorgt wird. Ein Brennstoffzellensystem wird vollständig mit reinem Wasserstoffgas betrieben, d.h. es weist kein Gaserzeugungssystem auf. Ein anderes Brennstoffzellensystem weist ein Gaserzeugungssystem auf, in dem Wasserstoff aus einem Brennmittel erzeugt wird, wobei der Wasserstoff durch geeignete Verfahren, etwa mittels Palladiummembranverfahren, gereinigt und als hochreiner Wasserstoff der Brennstoffzelleneinheit zugeführt wird. Der Wasserstoff, der in die Brennstoffzelleneinheit gelangt, ist nicht nur weitgehend von katalysatorschädlichen Verunreinigungen wie CO befreit, sondern auch von Verunreinigungen wie N₂ oder CO₂, welche üblicherweise in einem Reformat enthalten sind. Günstige Brennmittel können Stoffe wie Alkohole, etwa Methanol, Erdgas, Kohlenwasserstoffe, wie etwa Benzin, Ether und dergleichen sein.

In einer ersten Ausgestaltung wird die Brennstoffzelleneinheit mit einem lastabhängigen Wasserstoffüberschuss betrieben.

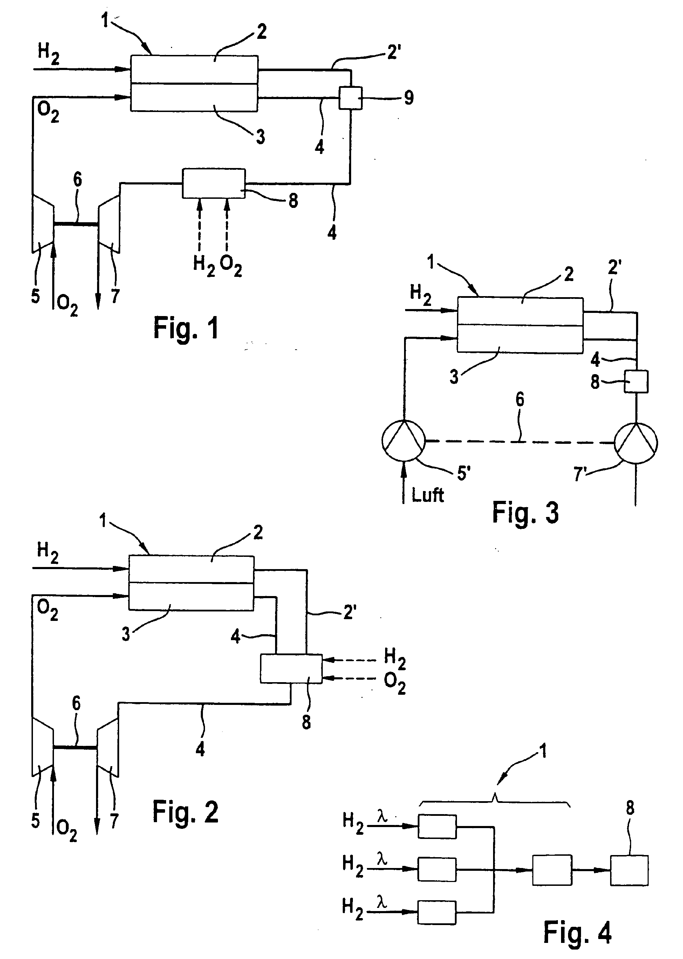

In Fig. 1 ist Brennstoffzellensystem dargestellt. Eine Brennstoffzelleneinheit 1 weist eine Anode 2 und eine Kathode 3 auf. Die Brennstoffzelleneinheit 1 ist vereinfacht als eine einzige Zelle dargestellt, kann aber auch einen Stapel von Brennstoffzellen repräsentieren. Insbesondere kann eine solche Brennstoffzelleneinheit 1 durch Brennstoffzellenstapel gebildet sein, die strömungstechnisch parallel und/oder in Serie geschaltet sind.

Die Anode 2 wird über einen Medien-Zustromweg mit Wasserstoff H₂, z.B. aus einem Wasserstoffvorrat, beaufschlagt. Das Abgas aus der Anode 2 wird über einen Anodenabgas-Strömungsweg 2' aus der Brennstoffzelleneinheit 1 abgeführt.

Ein Verdichter 5 ist in einem Medien-Zustromweg für die Kathode 3 angeordnet und verdichtet ein sauerstoffhaltiges Medium O₂, bevorzugt Luft, welches der Kathode 3 mit hohem Druck zugeführt wird. In der Brennstoffzelleneinheit 1 findet dann die Reaktion zwischen Sauerstoff und Wasserstoff statt. Der Anodenabgasstrom kann dem Kathodenabgasstrom in einem Mischer 9 zugemischt werden. Im weiteren Kathodenabgas-Strömungsweg 4 ist ein katalytischer Brenner 8 angeordnet, in dem das Kathodenabgas und das Anodenabgas katalytisch verbrannt werden und die Abgastemperatur des Brennstoffzellenabgases erhöht wird. Dazu kann über eine Zudosiereinrichtung dem katalytischen Brenner 8 zusätzlich Brennstoff, etwa Wasserstoff und/oder Sauerstoff, zudosiert werden. Dies ist in der Figur durch je eine gestrichelte Pfeillinie angedeutet.

Das heiße Kathodenabgas gelangt über den Kathodenabgas-Strömungsweg 4 in eine Expansionsmaschine 7. Die Expansionsmaschine 7 ist vorzugsweise mit dem Verdichter 5 gekoppelt, besonders bevorzugt mechanisch über eine gemeinsame Welle 6. Die bevorzugte Expansionsmaschine 7 ist eine Turbine und kann durch die aus dem heißen Abgas rekuperierte Energie den Verdichter 5 antreiben.

Eine weitere Verschaltung zeigt Fig. 2. Gleiche Elemente sind mit denselben Bezugszeichen wie in Fig. 1 bezeichnet.

Wasserstoff H₂ wird über einen Anoden-Zustromweg einer Anode 2 einer Brennstoffzelleneinheit 1 zugeführt. Die Kathode 3 wird über einen Medien-Zustromweg für die Kathode 3 mit sauerstoffhaltigem Medium O₂ versorgt, vorzugsweise Luft. Dieses Medium wird in einem im Medien-Zustromweg angeordneten Verdichter 5, vorzugsweise einem Kompressor, auf ein gewünschtes Druckniveau verdichtet und der Kathode 3 zugeführt. Ein bevorzugtes Druckniveau liegt oberhalb von etwa 2 bar absolut. Die Kathodenabluft wird in einem Kathodenabgas-Strömungsweg 4 aus der Kathode 3 weggeführt. Anodenabgas aus dem Anodenabgas-Strömungsweg 2' kann dem Kathodenabgas im Kathodenabgas-Strömungsweg 4 zugemischt werden oder jeweils separat einem katalytischen Brenner 8 zugeführt werden. Am oder im katalytischen Brenner 8 kann über eine Zudosiereinrichtung dem Gemisch vorzugsweise wasserstoffhaltiger Brennstoff zusätzlich zudosiert werden. Ein günstiger Brennstoff ist Wasserstoff, Methanol, und/oder Benzin und/oder Methan.

Das Kathodenabgas-Gemisch wird beim Durchströmen des katalytischen Brenners 8 auf eine erste hohe Temperatur T₁, vorzugsweise zwischen 450°C und 1100°C, besonders bevorzugt zwischen 150°C und 1100°C, erhitzt. Das heiße Medium gelangt dann zu einer Expansionsmaschine 7, vorzugsweise einem Turbolader. Die Expansionsmaschine 7 treibt vorzugsweise den Verdichter 5 über eine Kopplung 6 an. Der Verdichter 5 kann einstufig oder auch zwei- oder mehrstufig sein. Vorzugsweise erfolgt die Kopplung über eine gemeinsame Welle 6 zwischen Verdichter 5 und Expansionsmaschine 7. Die Einkopplung der aus dem heißen Abgas rekuperierten Energie kann jedoch auch elektrisch erfolgen; in diesem Fall ist ein Turbogenerator vorzusehen.

Das Abgas wird dabei auf eine zweite Temperatur T₂ abgekühlt, die niedriger als die erste Temperatur T₁ ist, vorzugsweise beträgt die Temperaturdifferenz ΔT zwischen erster Temperatur T₁ und zweiter Temperatur T₂ zwischen 50°C und 200°C.
Aus der Expansionsmaschine 7 wird das abgekühlte Abgas abgeführt. Die noch vorhandene Abgasenergie kann in etwaigen weiteren Heizvorrichtungen des Systems verwendet werden, etwa um Medien auf eine geeignete Betriebstemperatur zu bringen.

In Fig. 3 ist eine weitere bevorzugte Ausführung der Erfindung dargestellt, wobei keine Kopplung zwischen Verdichter 5 und Expander 7 vorgesehen ist. Gleiche Elemente wie in Fig. 1 und 2 sind mit gleichen Bezugszeichen versehen; der Aufbau entspricht dem vorausgehend Beschriebenen. Anstatt des Verdichters 5 ist in der Kathodenzuführung ein Turboverdichter 5' und statt der Expansionsmaschine 7 im Kathodenabgas-Strömungsweg 4 ist eine Turbine mit Generator 7' vorgesehen.

Die Expansionsmaschine 7 kann bei erhöhter Abgastemperatur eine erhebliche Leistung in das System bzw. in den Verdichter 5 zurückführen. Ein etwaiger elektrischer Antrieb des Verdichters 5 kann dadurch kleiner ausgelegt werden als ohne die erfindungsgemäße Anordnung.

Werden die Abgastemperaturen T₁ im katalytischen Brenner 8 sehr stark erhöht, so kann die Möglichkeit genutzt werden, im Volliastfall die notwendige Verdichterleistung noch weiter zu senken und somit die Nutzleistung des Brennstoffzellensystems zu erhöhen. Somit kann zum einen die erforderliche Brennstoffzellenleistung und zum anderen das Gesamtsystem bei gleicher Nutzleistung verkleinert werden. Dies hat positive Auswirkungen auf Kosten, Volumen und Masse des Brennstoffzellensystems.

Im extremen Auslegungsfall kann die Verdichter-/Expansionsmaschinengruppe 5, 7 auch den Generatorbetrieb erreichen, d.h. die Expansionsmaschine 7 erzeugt soviel Energie, dass nicht nur die Verdichtung vollständig bestritten werden kann, sondern auch noch an einen elektrischen Antriebsmotor des Verdichters 5 elektrische Energie abgeben kann. Diesem extremen Auslegungsfall entsprechen sehr hohe Abgastemperaturen, z.B. zwischen 600°C bis 1100°C. In diesem vorteilhaften Zustand, wenn Expansionsmaschine 7 und der Verdichter 5 als Generator zusammenwirken, erhöht der Generator die Nutzleistung des Brennstoffzellensystems.

Wird die Verdichter-/Expansionsmaschinen-Gruppe 5, 7 gesteuert, so wird der Temperaturabfall des Abgases über der Expansionsmaschine 7 mittels eines Kennfeldes in einem Datenspeicher, vorzugsweise in einer Steuereinrichtung, abgelegt und die Zudosiereinrichtung zur Zugabe von Brennstoff in den katalytischen Brenner 8, etwa ein Dosierventil, im Betrieb entsprechend eingestellt.

Vorzugsweise gibt das Kennfeld den Temperaturabfall abhängig von der Last und dem Druckverhältnis π der Expansionsmaschine 7 an, wobei π das Verhältnis zwischen dem Druck am Expansionsmaschinen-Eingang zu dem Druck am Expansionsmaschinen-Ausgang angibt. So ergibt sich z.B. bei einem System bei Volllast und einem Druckverhältnis von π = 2,5-3 ein Temperaturabfall von z.B. 60°C-120°C über der Expansionsmaschine 7, abhängig von deren Wirkungsgrad.

Aufgrund der hohen Temperaturen ist der Umsatz im katalytischen Brenner 8 trotz einer dort stattfindenden Brennstoffzudosierung sehr gut, so dass keine nennenswerten HC-Emissionen zu befürchten sind, falls nicht Wasserstoffgas, sondern ein anderes wasserstoffhaltiges Medium, z.B. Methanol, als Brennstoff zugegeben wird. Andererseits ist das Temperaturniveau niedrig genug, dass keine Stickoxidbildung stattfindet.

Vorzugsweise ist eine Systemarchitektur zu wählen, bei der zumindest an einer Stelle im Abluftstrang des Systems ein hohes Temperaturniveau herrscht. An dieser Stelle ist zweckmäßigerweise die Expansionsmaschine 7 zu platzieren und gegebenenfalls nachfolgend das Abgas abzukühlen. Die nachfolgenden Druckverluste im Gasströmungsweg sollten minimiert werden.

Üblicherweise ist es bei Brennstoffzellensystemen wünschenswert, die Brennstoffzelleneinheit 1 mit möglichst geringem Wasserstoffüberschuss zu betreiben. Bei einem Wasserstoffverhälthis λ=1 wird soviel Wasserstoff in der Brennstoffzelle verbraucht, wie angeboten wird. Es gelangt kein Wasserstoff in das Anodenabgas. Andererseits ist ein nennenswerter Wasserstoffüberschuss gegenüber dem Sauerstoff in der Kathode 3 für eine zufriedenstellende stabile Reaktion notwendig. Daher wird üblicherweise die Brennstoffzelleneinheit 1 mit Wasserstoffüber-schuss bei λ=1,1 oder mehr betrieben. Um einen Wasserstoffverlust bei einem λ>1 zu vermeiden, kann das Anodenabgas zwar rezykliert werden und so der Wasserstoff aus dem Abgas wieder zur Reaktion in der Brennstoffzelle 1 eingesetzt werden. Dies erfordert jedoch einen erhöhten System-Aufwand. Bei einem offenen System würde der überschüssige, nicht verbrauchte Wasserstoff mit dem Abgas aus dem System entfernt.

Das erfindungsgemäße Brennstoffzellensystem ermöglicht es daher besonders vorteilhaft, das System zu vereinfachen und günstige Wirkungsgrade bei Teillast und Volllast zu erreichen, auch wenn mit Wasserstoff-Überschuss gearbeitet wird.
Die Verschaltung der Abgasströme hat zur Folge, dass zwischen Kathode 3 und Anode 2 kein unterschiedlicher Druck herrscht, sondern ein automatischer Druckausgleich stattfindet. Das Brennstoffzellensystem bei dem die Brennstoffzelleneinheit 1 mit Wasserstoffgas betrieben wird, kann ohne Rezyklieren des Anodenabgases als sogenanntes offenes System betrieben werden, ohne dass Wasserstoff aus dem Abgas ungenutzt verloren geht. Es treten auch keine unerwünschten Wasserstoffemissionen auf, da diese im katalytischen Brenner 8 umgesetzt werden. Des Weiteren können sich durch den offenen Betrieb keine Inertgase bzw. Verunreinigungen in der Brennstoffzelleneinheit 1 anreichern.

Wird das Brennstoffzellensystem mit einem lastabhängigen Lambda-Wert für Wasserstoff betrieben, d.h. wird der Wasserstoff-Überschuss in der Brennstoffzelleneinheit 1 lastabhängig eingestellt, so kann bei Volllast der Anode 2 ein sehr hoher Wasserstoffüberschuss, etwa λ=1,5, d.h. ein Wasserstoffüberschuss von 50%, zugeführt werden. Die Temperatur des Abgases im katalytischen Brenner 8 steigt dann auf sehr hohe Werte an und liefert eine sehr hohe Abgasenergie im Expanderteil 7 bzw. Turbolader 7`, die vorteilhaft für den Antrieb des Kompressors 5 genutzt werden kann.

Bei üblichen Systemen muss die Brennstoffzelleneinheit 1 groß genug für Nutzlast und Kompressorleistung ausgelegt werden. Bei einem Brennstoffzellensystem mit 15 kW-Kompressor und 65 kW Nutzleistung muss also z.B. eine 80 kW-Brennstoffzelleneinheit vorgesehen werden. Gemäß der Erfindung kann das System entsprechend verkleinert werden, weil in der Auslegung der Brennstoffzelleneinheit 1 die Kompressorleistung nicht mehr berücksichtigt werden muss, da diese wie beschrieben durch Energie aus dem katalytischen Brenner 8 gedeckt werden kann.

Dafür kann bei Teillast der Wasserstoffüberschuss etwa λ=1,05 oder weniger betragen, so dass bei Teillast also nur ein minimaler Wasserstoffüberschuss eingesetzt werden muss. Besonders günstig ist dies in einem reinen Wasserstoff-Brennstoffzellensystem, bei der keine Gasreinigung notwendig ist, kann aber auch in einem System eingesetzt werden, bei dem reiner Wasserstoff aus dem Reformat einer Gaserzeugungseinheit extrahiert wird. Der überschüssige Wasserstoff kann trotzdem durch die Verbrennung im katalytischen Brenner 8 noch Abgasenergie für den Expander 7 und damit für den Antrieb des Kompressors 5 liefern.

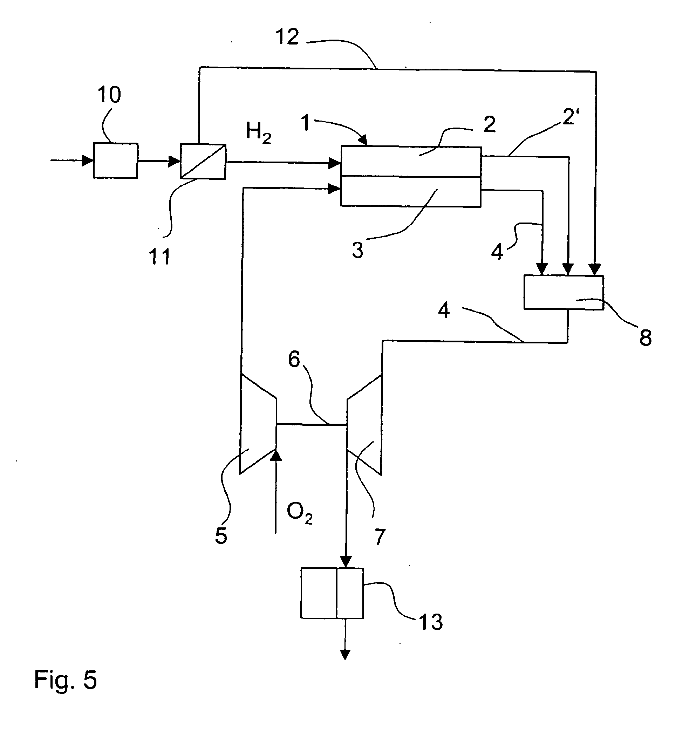

In Fig. 5 ist ein weiteres bevorzugtes Brennstoffzellensystem dargestellt, welches ein Gaserzeugungssystem mit einer Einrichtung 10 zur Wasserstoffgewinnung durch Reformierung oder partielle Oxidation des Brennmittels aufweist, sowie eine Reinigungseinheit 11, um das in der Einrichtung 10 gewonnene wasserstoffreiche Produktgas möglichst weitgehend von Verunreinigungen zu trennen. Gleiche Elemente sind in der Figur mit denselben Bezugszeichen wie in den Figuren 1, 2, 3 bezeichnet.

In der Reinigungseinheit 11 wird Wasserstoff aus dem wasserstoffreichen Produktgas, welches aus der Einrichtung 10 austritt, abgetrennt. Vorzugsweise erfolgt dies mittels eines Membranverfahrens oder anderen geeigneten Verfahren, bei denen Wasserstoff im Wesentlichen selektiv auch von inerten Verunreinigungen getrennt werden kann. Bei einem bevorzugten Verfahren diffundiert Wasserstoff selektiv durch eine Palladiummembran und wird von Verunreinigungen getrennt.

Der so gewonnene reine Wasserstoff wird der Anode 2 der Brennstoffzelleneinheit 1 zugeführt. Die Kathode 3 wird wiederum von dem Kompressor 5 mit Sauerstoff bzw. Luft versorgt. Anoden- und Kathodenabgas werden getrennt oder gemischt dem katalytischen Brenner 8 zugeführt, dem zusätzlich auch anderer Brennstoff zugeführt werden kann. Dem katalytischen Brenner 8 wird besonders vorteilhaft als weiterer Brennstoff der verunreinigte Rest des Produktgases zugeführt, aus dem der größte Teil des Wasserstoffs entfernt wurde.

Wird nämlich ein bevorzugtes Palladium-Membranmodul zum Abtrennen des Wasserstoffs eingesetzt, so verbleiben typischerweise 20% des Wasserstoffs im Restgas, während nur 80% des Wasserstoffs durch die Palladium-Membran abgetrennt werden und zur Anode 2 gelangen. Ähnliches gilt für andere Reinigungsverfahren.
Wird das Brennstoffzellensystem z.B. mit einem Wasserstoff-Überschuss von 20%, also einem Wasserstoff-Lambda-Wert von λ=1,2 betrieben, so bedeutet dies, dass im Restgas noch sehr viel Wasserstoff enthalten ist, der für die Brennstoffzelleneinheit 1 verloren ist. Wird mit geringerem Wasserstoff-Überschuss gearbeitet, um die Wasserstoff-Verluste zu verringern, etwa mit λ=1,05, so muss das Membranmodul 11 entsprechend groß ausfallen, um der Anode genügend Wasserstoff zur Verfügung stellen zu können. Indem das Restgas dem katalytischen Brenner 8 zugeführt wird, kann der darin enthaltene Wasserstoff im System vorteilhaft genutzt werden.

Wird mit einem flüssigen Brennmittel wie Benzin oder Methanol gearbeitet, kann die stromab des katalytischen Brenners 8 und/oder stromab der Expansionsmaschine 7 im Abgasstrom 4 mitgeführte Wärme vorteilhaft in einem zusätzlichen Wärmetauscher 13 zur Verdampfung von Brennmittel und/oder Wasser und/oder zur Reformierung des Brennmittels verwendet werden.

Die Erfindung ermöglicht durch die Nutzung der Abgasenergie somit eine kleinere Dimensionierung des Stromerzeugungssystems als bei einem konventionellen Brennstoffzellensystem, da im Volllastfall Brennstoff, z.B. zusätzliches Methanol, über Zudosierung in den katalytischen Brenner 8 und Erzeugung sehr hoher Abgastemperaturen über die Verdichter-/Expansionsmaschinen-Gruppe 5, 7 direkt in elektrische Energie umwandelbar ist, wobei durch die lastabhängige Einstellung des Wasserstoff-Überschusses insgesamt der Wasserstoff sehr effizient genutzt werden kann.

In einer besonders günstigen Ausgestaltung kann Wasserstoff als Brennmittel eingespart werden, indem die Brennstoffzellenstapel der Brennstoffzelleneinheit 1 besonders vorteilhaft verschaltet werden. Der Wasserstoff wird effizienter genutzt. In zusätzlicher Kombination mit einer lastabhängigen Einstellung des Wasserstoff-Überschusses beim Betrieb der Brennstoffzelle wird die Wasserstoff-Verwendung weiter verbessert.

Vorzugsweise werden mehrere Brennstoffzellenstapel strömungstechnisch parallel geschaltet und ein oder mehrere Brennstoffzellenstapel strömungstechnisch dazu derart in Reihe geschaltet, dass der Wasserstoff-Überschuss, der in der vorgeschalteten Parallelschaltung der Brennstoffzellenstapel nicht umgesetzt wird, ausreicht, um den oder die dazu in Serie geschalteten Brennstoffzellenstapel zu betreiben. Die Zahl der parallelgeschalteten und der in Serie geschalteten Brennstoffzellenstapel wird dabei so gewählt, dass alle Brennstoffzellenstapel in etwa mit einem vergleichbaren Wasserstoff-Überschuss betrieben werden können. Die Anordnung ermöglicht eine vorteilhafte Optimierung des Wasserstoffverbrauchs.

Eine übliche Brennstoffzelleneinheit 1 z.B. wird aus vier einzelnen Brennstoffzellenstapeln aufgebaut, die parallel durchströmt werden. Die Größe der Stapel richtet sich nach der elektrischen Spannung und/oder Leistung, die von der Brennstoffzelleneinheit 1 abverlangt wird. Für den üblichen Betrieb ist ein ausreichender Wasserstoff-überschuss λ vorzusehen, der typischerweise bei λ> 1,2 liegt.

In einem Beispiel gemäß Fig. 4 sind drei Brennstoffzellenstapel strömungstechnisch parallel geschaltet und ein Brennstoffzellenstapel in Serie mit diesen drei parallel geschalteten Stapeln angeordnet, so dass der vierte Brennstoffzellenstapel vom Abgasstrom der drei vorgeschalteten Brennstoffzellenstapel durchströmt wird. Dabei erhält der vierte Brennstoffzellenstapel auch einen Überschuss an Wasserstoff. Die vier Brennstoffzellenstapel werden in der Figur insgesamt als Brennstoffzelleneinheit 1 bezeichnet.

Soll die Brennstoffzelleneinheit 1 insgesamt mit einem Wasserstoff-Überschuss von λ=1,1 betrieben werden, ist für vier Stapel in paralleler Anordnung insgesamt 4x1,1, d.h. ein Wasserstoff-Überschuss von λ'=4,4, vorzusehen. Werden jedoch nur drei Brennstoffzellenstapel parallel und der vierte Brennstoffzellenstapel in Serie dazu geschaltet, so erhält jeder der drei parallelen Brennstoffzellenstapel bei einem nominellen λ=1,1 einen Wasserstoff-Überschuss von λ=(4,4/3)≈1,5 und der vierte Brennstoffzellenstapel erhält im Abgasstrom einen vergleichbaren Wasserstoff-Überschuss von rund λ=1,4.

Der Wasserstoffüberschuss, den jeder einzelne, in der bevorzugten Verschaltung angeordnete Brennstoffzellenstapel individuell erhält, ist höher als der Wasserstoff-Überschuss von λ=1,1, mit dem die Brennstoffzelleneinheit 1 insgesamt betrieben wird. Für die individuellen Brennstoffzellenstapel der Brennstoffzelleneinheit 1 ist der Wasserstoff-Überschuss also effektiv erhöht. Wird die Brennstoffzelleneinheit 1 mit bevorzugtem sehr reinem Wasserstoff betrieben, erhält auch die in Strömungsrichtung letzte, vierte Zelle einerseits einen Wasserstoffüberschuss, der vergleichbar oder nur etwas geringer ist als der der vorgeschalteten Zellen und andererseits einen ausreichend sauberen Medienstrom, bei dem der Wasserstoff nicht unzulässig stark mit Verunreinigungen verdünnt ist.

Im Teillastbereich mit einem sehr geringen Wasserstoffüberschuss von λ=1,05 entspricht dies bei vier Brennstoffzellenstapel nominell 4x1,05, so dass bei drei parallel geschalteten Brennstoffzellenstapel der Wasserstoff-Überschuss pro Brennstoffzellenstapel λ=(4,2/3)=1,4 und einem im Abgasstrom der drei Brennstoffzellenstapel angeordneten vierten Brennstoffzellenstapel der Wasserstoff-Überschuss λ=1,2 beträgt. Wird die dergestalt bevorzugt verschaltete Brennstoffzelleneinheit 1 mit einem lastabhängigen Wasserstoff-Überschuss betrieben, etwa hohem Überschuss bei Volllast und geringem Überschuss bei Teillast, so kann durch die beschriebene Parallel- und Serienverschaltung der Brennstoffzellenstapel erreicht werden, dass jeder individuelle Brennstoffzellenstapel in der Brennstoffzelleneinheit 1 trotzdem einen deutlich höheren Wasserstoff-Überschuss erhält.

Die Brennstoffzelleneinheit 1 kann auch aus einer größeren oder geringeren Zahl von Brennstoffzellenstapeln gebildet werden. Günstig ist dabei, dass zumindest zwei Brennstoffzellenstapel strömungstechnisch parallel geschaltet sind und im Abgasstrom der zumindest zwei Brennstoffzellenstapel zumindest ein weiterer Brennstoffzellenstapel strömungstechnisch in Serie zu den beiden Brennstoffzellenstapeln angeordnet ist, der mit dem Wasserstoff-Überschuss der vorgeschalteten Zellen betrieben wird.

In Kombination mit dem katalytischen Brenner 8 im Abgasstrom und der Rekuperation der Abgasenergie lässt sich vorteilhaft der Wasserstoffverbrauch der Brennstoffzelleneinheit 1 vermindern und gleichzeitig die Brennstoffzelleneinheit 1 kleiner auslegen.

## Patentansprüche

1. Verfahren zum Betreiben eines Brennstoffzellensystems, das eine Brennstoffzelleneinheit (1) mit einer Anode (2) und einer Kathode (3), einen mit der Anode (2) verbundenen Medien-Zustromweg, einen mit der Kathode (3) verbundenen Medien-Zustromweg, einen Anodenabgas-Strömungsweg (2') und einen Kathodenabgas-Strömungsweg (4) umfasst, bei dem die Kathode (3) von einem in dem mit der Kathode (3) verbundenen Medien-Zustromweg angeordneten Verdichter (5) mit Luft versorgt wird, von der Brennstoffzelleneinheit (1) im Betrieb erzeugtes Anodenabgas und Kathodenabgas einem katalytischen Brenner (8) zugeführt wird und die in dem Brenner (8) katalytisch umgesetzten Abgasströme in eine den Verdichter (5) antreibende Expansionsmaschine (7) geleitet werden,
**dadurch gekennzeichnet, dass** das Brennstoffzellensystem mit einem lastabhängigen Wasserstoffüberschuss betrieben wird, wobei der Wasserstoffüberschuss im Teillastbetrieb des Brennstoffzellensystems so eingestellt wird, dass in der Brennstoffzelleneinheit (1) eine stabile Brennstoffzellenreaktion stattfindet, und wobei der Brennstoffzelleneinheit (1) im Volllastbetrieb des Brennstoffzellensystems ein gegenüber dem Wasserstoffüberschuss im Teillastbetrieb erhöhter Wasserstoffüberschuss zugeführt wird.

2. Verfahren nach Anspruch 1,
**dadurch gekennzeichnet, dass** der Brennstoffzelleneinheit (1) im Teillastbetrieb ein Wasserstoff-Überschuss von höchstens 10% und im Volliastbetrieb von mindestens 20% zugeführt wird.

3. Verfahren nach Anspruch 1 oder 2,
**dadurch gekennzeichnet, dass** das Kathodenabgas und/oder Anodenabgas beim Durchströmen des katalytischen Brenners (8) auf eine erste Temperatur zwischen 150°C und 1100°C erhitzt wird.

4. Verfahren nach einem der Ansprüche 1 bis 3,
**dadurch gekennzeichnet, dass** dem katalytischen Brenner (8) zur Verbrennung des Kathodenabgases ein Brennstoff zudosiert wird.

5. Verfahren nach einem der Ansprüche 1 bis 4,
**dadurch gekennzeichnet, dass** die Zudosierung des Brennstoffs in den katalytischen Brenner (8) gesteuert wird, wobei Daten aus einem Kennfeld einer Steuereinrichtung entnommen werden, welches einen Temperaturabfall des Kathodenabgases über der Expansionsmaschine (7) in Abhängigkeit von einem Druckverhältnis (π) der Expansionsmaschine (7) enthält.

6. Verfahren nach einem der Ansprüche 1 bis 5,
**dadurch gekennzeichnet, dass** das Kathodenabgas im katalytischen Brenner (8) so hoch erhitzt wird, dass die Expansionsmaschine (7) und der Verdichter (5) als Generator zusammenwirken und der Generator die Nutzleistung des Brennstoffzellensystems erhöht.

7. Verfahren nach einem der Ansprüche 1 bis 6,
**dadurch gekennzeichnet, dass** Brennstoffzellenstapel der Brennstoffzelleneinheit (1) strömungstechnisch parallel mit Wasserstoff-Überschuss durchströmt werden und ein strömungstechnisch in Serie geschalteter Brennstoffzellenstapel vom überschüssigen Wasserstoff mit Wasserstoff-Überschuss durchströmt wird.

## Claims

1. Method for operating a fuel cell system which comprises a fuel cell unit (1) with an anode (2) and a cathode (3), a media inlet path connected to the anode (2), a media inlet path connected to the cathode (3), an anode exhaust gas flow path (2') and a cathode exhaust gas flow path (4), wherein the cathode (3) is supplied with air by a compressor (5) located in the media inlet path connected to the cathode (3), wherein anode exhaust gas and cathode exhaust gas generated by the fuel cell unit (1) in operation are fed to a catalytic burner (8), and wherein the exhaust gas streams catalytically converted in the burner (8) are directed into an expansion machine (7) driving the compressor (5),
**characterised in that** the fuel cell system is operated with load-dependent excess hydrogen, the excess hydrogen being adjusted in the part-load operation of the fuel cell system in such a way that a stable fuel cell reaction occurs in the fuel cell unit (1), and **in that** a volume of excess hydrogen greater than the volume of excess hydrogen provided in part-load operation is supplied to the fuel cell unit (1) in the full-load operation of the fuel cell system.

2. Method according to claim 1,
**characterised in that** the fuel cell unit (1) is supplied with a maximum of 10% excess hydrogen in part-load operation and with a minimum of 20% excess hydrogen in full-load operation.

3. Method according to claim 1 or 2,
**characterised in that** the cathode exhaust gas and/or the anode exhaust gas is/are heated to a first temperature between 150°C and 1100°C when flowing through the catalytic burner (8).

4. Method according to any of claims 1 to 3,
**characterised in that** a fuel is metered to the catalytic burner (8) for the combustion of the cathode exhaust gas.

5. Method according to any of claims 1 to 4,
**characterised in that** the metering of the fuel into the catalytic burner (8) is controlled, wherein data are taken from a characteristic map of a control unit, which characteristic map includes a temperature drop of the cathode exhaust gas across the expansion machine (7) as a function of a pressure ratio (π) of the expansion machine (7).

6. Method according to any of claims 1 to 5,
**characterised in that** the cathode exhaust gas is heated to so high a temperature in the catalytic burner (8) that the expansion machine (7) and the compressor (5) act together as a generator and the generator increases the effective power of the fuel cell system.

7. Method according to any of claims 1 to 6,
**characterised in that** in terms of flow technology there is parallel flow of excess hydrogen through the fuel cell stack of the fuel cell unit (1) and **in that** the excess hydrogen flows through a fuel cell stack which is connected in series in terms of flow technology.

## Revendications

1. Procédé de fonctionnement d'un système de piles à combustible qui comprend une unité de piles à combustible (1) avec une anode (2) et une cathode (3), un chemin d'amenée d'agents relié à l'anode (2), un chemin d'amenée d'agents relié à la cathode (3), un chemin d'écoulement (2') de gaz d'échappement d'anode et un chemin d'écoulement (4) de gaz d'échappement de cathode, selon lequel la cathode (3) est alimentée en air par un compresseur (5) disposé dans le chemin d'amenée d'agents relié à la cathode (3), le gaz d'échappement d'anode et de cathode produit par l'unité de piles à combustible (1) en fonctionnement est amené au brûleur (8) catalytique et les flux de gaz d'échappement convertis de manière catalytique dans le brûleur (9) sont conduits dans la machine à expansion (7) entraînant le compresseur (S) **caractérisé en ce que** le système de piles à combustible fonctionne avec un excès d'hydrogène dépendant de la charge, l'excès d'hydrogène étant réglé pour le fonctionnement partiel du système de piles à combustible de telle sorte qu'une réaction des piles à combustible stable ait lieu dans l'unité des piles à combustibles, et un excès d'hydrogène supérieur à l'excès d'hydrogène en fonctionnement partiel étant amené à l'unité de piles à combustible (1) en fonctionnement pleine charge du système de piles à combustible.

2. Procédé selon la revendication 1, **caractérisé en ce qu'**un excès d'hydrogène de 10 % maximum est amené à l'unité de piles à combustible (1) en fonctionnement partiel et d'au moins 20 % en fonctionnement pleine charge.

3. Procédé selon la revendication 1 ou la revendication 2, **caractérisé en ce que** le gaz d'échappement de cathode et / ou le gaz d'échappement d'anode est chauffé à une première température entre 150 °C et 1 100 °C lors du passage dans le brûleur catalytique (8).

4. Procédé selon l'une quelconque des revendications 1 à 3, **caractérisé en ce qu'**un combustible est ajouté au brûleur catalytique (8) pour la combustion du gaz d'échappement de cathode.

5. Procédé selon l'une quelconque des revendications 1 à 4, **caractérisé en ce que** l'ajout du combustible dans le brûleur catalytique (8) est commandée, les données provenant du diagramme d'un dispositif de commande, lequel diagramme contient une chute de température du gaz d'échappement de cathode par la machine à expansion (7) en fonction d'un rapport de pression (π) de la machine à expansion (7).

6. Procédé selon l'une quelconque des revendications 1 à 5, **caractérisé en ce que** le gaz d'échappement de cathode est chauffé dans le brûleur catalytique (8) de manière si élevée que la machine à expansion (7) et le compresseur (5) coopèrent en tant que générateur et le générateur augmente la puissance utile du système de piles à combustible.

7. Procédé selon l'une quelconque des revendications de 1 à 6, **caractérisé en ce que** l'empilement de piles à combustible de l'unité de piles à combustible (1) est traversé par l'excès d'hydrogène parallèlement selon la technique des fluides et un excès d'hydrogène passe à travers - selon la technique des fluides - un empilement de piles à combustible connectées en série.
